# FASCICULE DE BREVET EUROPEEN

(11) **EP 1 009 171 B1**
(45) Date de publication et mention de la délivrance du brevet: **27.10.2004**
(21) Numéro de dépôt: 99403034.4
(22) Date de dépôt: 06.12.1999
(51) Int. Cl.: H04Q 3/00

(54) **Passerelle dans un réseau intelligent**
Gateway in einem intelligenten Netz
Gateway in an intelligent network

(30) Priorité: 10.12.1998 FR 9815577
(43) Date de publication de la demande: 14.06.2000
(73) Titulaire: ALCATEL, 75008 Paris (FR)
(72) Inventeur: Couturier, Alban, 92320 Chatillon (FR)
(74) Mandataire: Lamoureux, Bernard

(56) Documents cités:
- EP-A- 0 726 682
- EP-A- 0 750 432
- EP-A- 0 873 024
- GB-A- 2 318 701
- US-A- 5 754 546

## Description

La présente invention concerne une passerelle entre deux réseaux, permettant aux services contenus dans des serveurs d'application situés sur un premier réseau, d'émettre des commandes pour modifier le comportement du second réseau et de recevoir des informations de celui-ci, sans connaître sa topologie, ni ses protocoles propres.

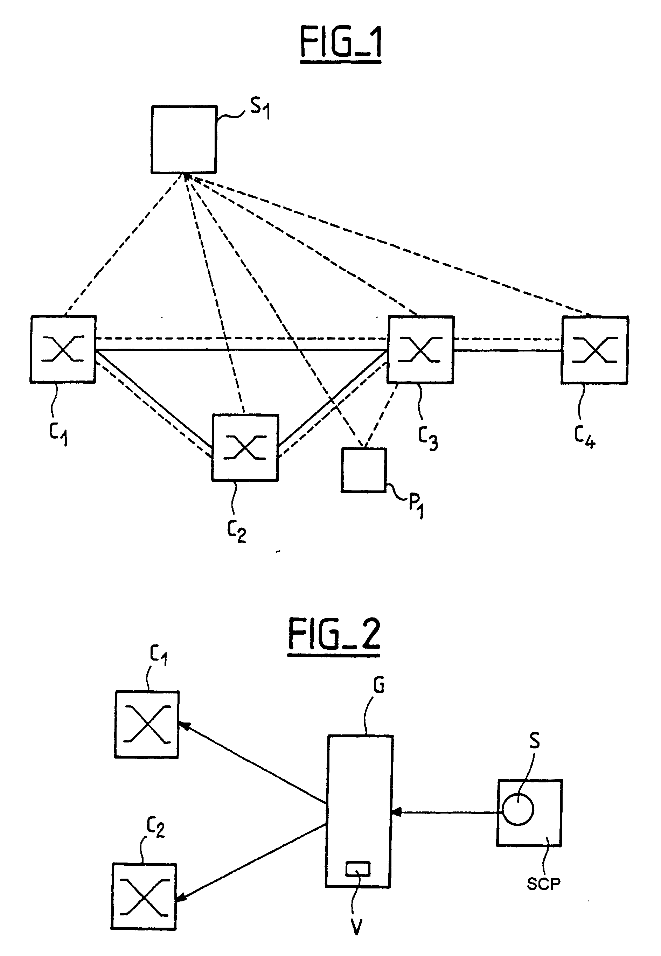

L'invention s'applique particulièrement bien au cas du réseau intelligent (RI), par exemple tel que défini par la série de recommandation Q.1200 de l'ITU-T (*International Telecommunication Union ― Telecommunication Standardization Section*). Le principe à la base du réseau intelligent est de séparer les fonctions d'acheminement des données (notamment, de la voix) et les services supplémentaires. Ce principe général a résulté sur une architecture matérielle telle que celle illustrée par la figure 1.

Sur cette figure 1, les références C₁, C_{2,} C₃ et C₄ représentent des commutateurs, c'est-à-dire des noeuds du réseau de transport qui est dessiné en trait plein sur la figure 1. Selon la terminologie propre aux réseaux intelligents, les commutateurs sont aussi appelés CAS pour Commutateur d'Accès au Service ou bien, selon la terminologie anglaise, SSP pour *Service Switching Point*.

Ces commutateurs ou CAS sont reliés à un ou plusieurs points de commande de service (PCS) ou SCP pour Service *Control Point,* en anglais.

Sur la figure 1, la référence S₁ illustre un de ces PCS. Ce sont sur ces PCS que sont stockés les différents services du réseau intelligent. On peut citer à titre d'exemples non limitatifs de services qui peuvent être proposés :
- Les services de facturations spéciales (facturation de l'appelé, facturation partagée etc.)
- Les services de filtrages d'appels personnalisés
- Les services de redirection d'appels

La référence P₁ représente quant à elle un périphérique intelligent (PI ou IP pour *Intelligent Peripheral,* en anglais). Un périphérique intelligent est typiquement une machine vocale sur laquelle est préenregistré un certain nombre d'annonces vocales qui sont délivrées à un usager du réseau, à la demande d'un service. Éventuellement, le périphérique intelligent permet l'interaction avec l'usager en lui permettant d'entrer une combinaison de touches à partir de son combiné téléphonique, cette combinaison étant ensuite transmise au service.

Les traits en pointillés représentent le réseau de signalisation, c'est-à-dire le réseau qui permet à tous les composants du réseau intelligent (C₁, C₂, C₃, C₄, P₁, S₁₎ de communiquer ensemble, de façon indépendante du réseau de transport. Notamment, c'est *via* ce réseau de signalisation que transiteront les messages établissant une connexion temporaire entre le CAS d'un usager et un périphérique intelligent, à la demande d'un service contenu sur un PCS.

Dans le cas d'un réseau intelligent conforme aux recommandations de la série Q.1200 de l'ITU-T, le protocole de signalisation qui est mis en oeuvre entre le point de contrôle de services (PCS) et les éléments de réseau (c'est-à-dire commutateurs et périphériques intelligents) est le protocole INAP, pour *Intelligent Network Application Protocol,* habituellement mis en oeuvre au-dessus d'une pile de protocoles de type SS7 telle que définie par la recommandation Q.700 de l'ITU-T.

Il est aussi possible d'utiliser d'autres protocoles sans pour autant nuire à l'architecture ni à aux principes du réseau intelligent. D'autres protocoles susceptibles d'être utilisés sont des protocoles propriétaires spécifiques à un fournisseur d'équipements pour réseaux de télécommunication.

Certains services nécessitent pour leur bon déroulement l'utilisation de périphériques intelligents. C'est par exemple le cas d'un service nécessitant l'authentification de l'usager appelant. Lorsqu'un usager fait appel à un tel service, ce dernier le connecte dans un premier temps à un périphérique intelligent dont le but sera :
- D'accueillir et de guider l'usager par des annonces vocales appropriées,
- De recueillir les données nécessaires à l'authentification (code confidentiel...)
- De les transmettre au service.

Le périphérique intelligent en question peut être intégré au CAS de l'usager, ou bien directement relié à celui-ci, ou encore il peut être associé à un autre commutateur et donc accessible qu'au travers du réseau. Un exemple de périphérique intelligent peut être trouvé dans GB-2318701.

On remarque donc que pour effectuer la connexion entre l'usager et le périphérique intelligent, le service doit avoir la connaissance d'une part de la localisation du périphérique intelligent le mieux approprié selon un certain critère (par exemple, le plus proche du CAS de l'usager), et d'autre part du protocole de communication permettant de se connecter au périphérique intelligent.

Cela engendre deux inconvénients majeurs :
Premièrement, cela signifie que le développement d'un nouveau service doit se faire en tenant compte d'une part de l'architecture du réseau de transport associé, et d'autre part du ou des protocoles de signalisations mis en oeuvre.
Deuxièmement, cela signifie que l'opérateur du réseau de transport doit rendre publique son architecture interne ainsi que les protocoles qu'il met en oeuvre afin de permettre l'offre de services externes à l'opérateur. Cette contrainte peut être draconienne pour ce dernier.

Le but de la présente invention est de rendre les services indépendants de l'architecture du réseau de transport et des protocoles qui y sont mis en oeuvre. Pour ce faire, l'invention a pour objet une passerelle entre deux réseaux permettant la communication entre des services contenus sur des serveurs d'applications situés sur le premier réseau, et des éléments de réseaux formant le second réseau, ces éléments de réseaux pouvant être des noeuds de commutation ou des ressources spécialisées et les services pouvant émettre, à destination de la passerelle, des demandes d'utilisation de ressource spécialisée à la suite d'un appel de service émanant d'un des noeuds de commutation, caractérisée en ce ladite passerelle possède :
- des moyens de sélection, pour, à la réception de chacune des demandes, choisir une ressource spécialisée parmi les ressources spécialisées, à l'aide d'une représentation (V) dudit second réseau,
- des moyens de connexion, pour mettre en oeuvre les échanges nécessaires avec les éléments de réseau, afin d'établir une connexion entre le noeud de commutation d'où émane l'appel de service, et la ressource spécialisée.

Selon des mises en oeuvres particulières de la passerelle selon l'invention, celle-ci peut comporter une ou plusieurs des caractéristiques suivantes :
- La représentation comporte une table de correspondance entre d'une part les éléments de réseau, et d'autre part les protocoles de communication supportés.
- La représentation comporte une table de correspondance entre les noeuds de commutation et les ressources spécialisées.
- Les ressources spécialisées sont des périphériques intelligents, les noeuds de commutation sont des commutateurs d'accès aux services et les serveurs d'applications sont des points de contrôle de services, conformément aux recommandations de la série Q.1200 de l'ITU-T.

Un autre objet de l'invention est le procédé mis en oeuvre par la passerelle telle que définie précédemment, c'est-à-dire un procédé pour connecter un noeud de commutation à une ressource spécialisée parmi un ensemble de ressources spécialisées disponibles, à la demande d'un service ayant été appelé par ce noeud de commutation, ledit service étant contenu par un serveur d'application. Ce procédé se caractérisé en ce qu'il comporte les étapes ordonnées suivantes :
- Émission par le service d'une demande d'utilisation de ressource spécialisée, à destination d'une passerelle,
- Choix, par cette passerelle, d'une ressource spécialisée parmi cet ensemble,
- Établissement, par la passerelle, de la connexion entre le noeud de commutation et la ressource spécialisée choisie.

L'invention a encore pour un objet un réseau intelligent comportant au moins une passerelle conforme à l'invention.

Un premier avantage de l'invention est que le développement, le déploiement et l'exploitation de nouveaux services sur les PCS peuvent se faire de façon indépendante de la topologie du réseau de transport, et plus particulièrement de la disposition relative des périphériques intelligents et des CAS, ainsi que du ou des protocoles de communications utilisés sur le réseau de signalisation.

Un autre avantage, résultant du premier, est qu'il devient facilement possible, pour un même service, de gérer plusieurs protocoles différents, par exemple différentes versions du protocole INAP.

D'autres avantages et caractéristiques de l'invention apparaîtront de façon plus claire dans la description de différents modes de réalisation qui va être faite en relation avec les figures jointes.
La figure 1, déjà commentée, représente l'architecture générale d'un réseau intelligent.
La figure 2 illustre une architecture conforme à la présente invention.
La figure 3 illustre un cas particulier d'application de l'invention au cas du réseau intelligent.

Dans un réseau de télécommunication quel qu'il soit les différents éléments de réseau qui le composent peuvent communiquer avec des protocoles de signalisation différents.

Dans le cas particulier du réseau intelligent, le protocole de signalisation utilisé est le protocole INAP ainsi que nous l'avons vu précédemment. Toutefois, il existe différentes versions de ce protocole.

Il existe par exemple une commande INAP appelée « ConnectToResource » dont le but est d'effectuer une connexion temporaire entre un commutateur d'accès aux services (CAS) et un périphérique intelligent intégré à ce commutateur. Cette commande comporte plusieurs paramètres dont un servant à identifier le périphérique intelligent auquel il faut se connecter.

Selon la spécification ETS 300 374-1 de l'ETSI (*European Telecommunication Standards Institute*), ce paramètre est un identifiant de routage désignant le périphérique intelligent

Selon la recommandation Q.1218 de l'ITU-T, ce paramètre peut aussi être un identifiant d'une demi-connexion (ou leg), c'est-à-dire, sommairement, une adresse d'un circuit électronique au sein du commutateur.

Ainsi, le type et la valeur de ce paramètre dépend de la recommandation mise en oeuvre par le commutateur.

Sur la figure 2, le service S situé sur le point de contrôle de service PCS envoie une demande de connexion à la passerelle G.

Celle-ci consulte alors la représentation V qu'elle possède du réseau. Cette représentation peut être définie comme étant un ensemble d'informations sur la topologie du réseau et/ou sur les protocoles utilisés par les différents éléments du réseau.

En fonction de cette représentation V et du commutateur destinataire de la demande, la passerelle convertit cette dernière en au moins une commande conforme au protocole supporté par ce commutateur destinataire, puis, éventuellement met en oeuvre un dialogue avec les éléments du réseau.

Selon une mise en oeuvre particulière, cette représentation V peut contenir une table de correspondance qui met en regard des différents éléments du réseau susceptibles de recevoir des commandes, le ou les protocoles qu'ils supportent. Un exemple d'une telle table de correspondance peut être comme suit :

| Élément de réseau | Protocole(s) supporté(s) |
|---|---|
| C₁ | INAP1 |
| C₂ | INAP2 |

En fonction de ce tableau, la passerelle G émettra une commande conforme au protocole INAP1 vers le commutateur C₁ si le commutateur C₁ est le destinataire de la demande de connexion, et il émettra une commande conforme au protocole INAP2 vers le commutateur C₂ si le commutateur C₂ est le destinataire de la demande de connexion.

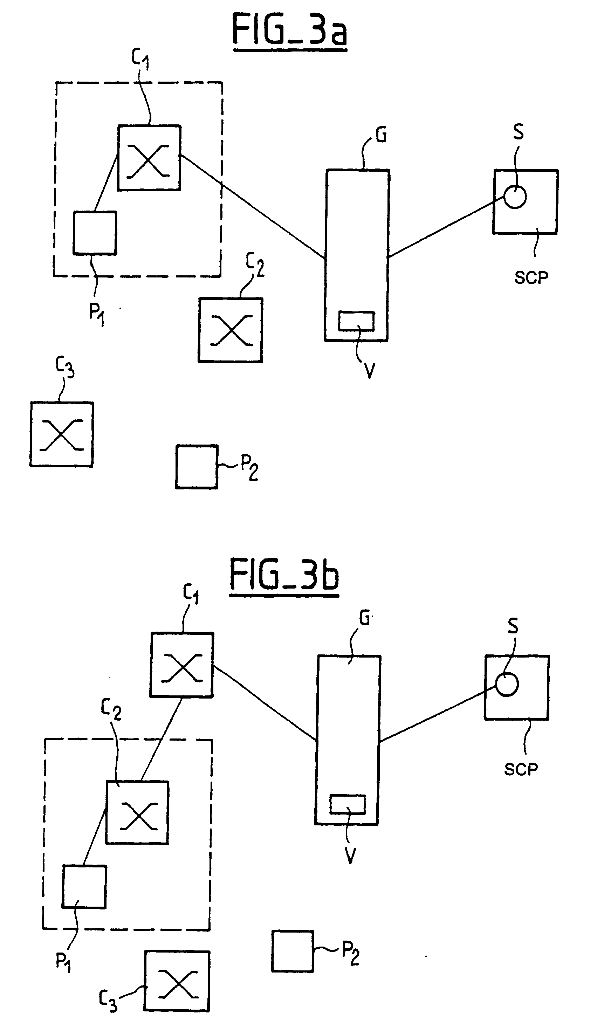

Les figure 3a et 3b illustrent un mode de réalisation pour une architecture de réseau intelligent comportant à la fois des commutateurs et des périphériques intelligents.

Le commutateur d'accès aux services C₁ demande l'exécution du service S situé sur le point de contrôle de service PCS. Ce service S nécessite à un certain moment, l'utilisation d'un périphérique intelligent. Il envoie alors une commande de connexion à la passerelle G. Ce service n'ayant pas la connaissance du réseau ne précise pas lequel des périphériques intelligents il désire utiliser.

La passerelle G, au moyen de la représentation V détermine alors quel est le périphérique intelligent auquel le commutateur C₁ doit être temporairement raccordé pour le bon déroulement du service S.

Cette détermination peut être simplement effectuée par une table de correspondance contenue dans la représentation V et qui met en regard les différents commutateurs (C₁, C₂, C₃) et les périphériques intelligents (P₁, P₂). Ainsi pour chaque commutateur, il peut être prédéterminé un périphérique intelligent auquel il sera systématiquement associé lors d'une demande de connexion provenant d'un service. Optionnellement, on peut prévoir d'ajouter des périphériques intelligents supplémentaires en regard de chaque commutateur, afin de fournir des solutions de remplacement si le premier périphérique intelligent vient à être défaillant ou surchargé.

Un exemple d'une telle table de correspondance est donné ci-dessous :

| Commutateur | Périphérique(s) intelligent(s) associé(s) |
|---|---|
| C₁ | P₁ |
| C₂ | P₁ |
| C₃ | P₂ |

Cette table de correspondance peut être établie par le fournisseur ou l'exploitant du réseau de télécommunication.

Elle peut être basée sur différents critères. Un bon critère peut être celui de proximité: on associe à chaque commutateur d'accès aux services, le périphérique intelligent le plus proche.

Grâce à la passerelle selon l'invention, le mécanisme devant être mise en oeuvre pour effectuer la connexion entre le commutateur destinataire de la demande de connexion émanant du service S et le périphérique intelligent, est transparent du point de représentation de service puisque entièrement pris en charge par la passerelle G elle-même.

La figure 3a illustre le cas où le périphérique intelligent associé P₁ est intégré au commutateur destinataire C₁.

Dans ce cas qui est le plus simple, la demande de connexion provenant du service S est simplement convertie en une commande INAP appelée « connectToRessource » qui est envoyée au commutateur C₁. Le périphérique intelligent P₁ envoie d'éventuelles valeurs de retour à la passerelle G par une autre commande INAP qui peut être convertie en un autre protocole pour être transmise au service.

Un autre cas possible, illustré par la figure 3b, est celui où le périphérique intelligent associé P₁ est directement relié à un autre CAS (ou contenu dans lui), référencé C₂ sur cette figure.

Dans ce cas, la demande de connexion du service S est convertie par la passerelle G en une commande INAP appelée « EstablishTemporaryConnection » qui est transmise au CAS destinataire C,. Cette commande comporte plusieurs paramètres dont :
- Un identifiant du commutateur relié au périphérique intelligent, C₂,
- Un identifiant de corrélation, et
- Un identifiant du point de contrôle de service.

Connaissant un identifiant du commutateur C₂, le commutateur C₁ peut alors entamer un dialogue avec lui. À la réception du premier message de la part du commutateur C₁, le commutateur C₂ émet une commande INAP appelée « AssistRequestlnstruction » à la passerelle G déterminée par l'identifiant du point de contrôle de service. Cette dernière est à même de mettre en rapport cette commande avec la demande de connexion issue du service via l'identifiant de corrélation.

La passerelle G peut alors émettre vers le commutateur C₂ une commande « ConnectToResource » comme dans le cas précédent auquel on est ramené.

Il existe encore d'autres cas de figures dont une liste exhaustive est donnée dans la recommandation Q.1218 de l'ITU-T. Dans tous ces cas, les spécificités dues aux localisations relatives du commutateur d'accès aux données de l'appelant et du périphérique intelligent sont prises en compte par la passerelle G. Du point de vue du service, une seule commande peut être rendue disponible, correspondant à la demande d'utilisation d'une ressource spécialisée. Le programmeur du service n'a pas besoin :
- De déterminer le périphérique intelligent auquel le commutateur de l'appelé doit se connecter,
- De gérer le dialogue entre les différents éléments de réseau (commutateurs et périphériques intelligents), en fonction des différentes positions relatives qui peuvent exister entre eux.
- De gérer les différents protocoles qui peuvent être mis en oeuvre par les éléments de réseau.

Une passerelle conforme à l'invention permet donc au développeur de nouveaux services de développer ceux-ci sans connaître les protocoles et l'architecture du réseau sous-jacent.

Une mise en oeuvre particulière consiste à réaliser la passerelle et le ou les points de contrôle de services sur une plate-forme CORBA (*Common Object Request Broker Architecture*) ainsi que spécifiée par l'OMG (*Open Management Group*). Le protocole de communication utilisé entre les passerelles et les PCS est alors le protocole de communication CORBA appelée GIOP, pour *General Inter-ORB Protocol*, en anglais.

## Revendications

1. Passerelle (G) entre deux réseaux permettant la communication entre des services (S) contenus sur des serveurs d'applications (PCS) situés sur le premier réseau, et des éléments de réseaux formant le second réseau, lesdits éléments de réseaux pouvant être des noeuds de commutation (C₁, C₂, C₃) ou des ressources spécialisées (P₁, P₂), lesdits services (S) pouvant émettre, à destination de ladite passerelle, des demandes d'utilisation de ressource spécialisée à la suite d'un appel de service émanant d'un desdits noeuds de commutation (C₁, C₂, C₃), caractérisée en ce ladite passerelle possède :
• des moyens de sélection, pour, à la réception de chacune desdites demandes, choisir une ressource spécialisée parmi lesdites ressources spécialisées (P₁, P₂) à l'aide d'une représentation (V) dudit second résea u,
• des moyens de connexion, pour mettre en oeuvre les échanges nécessaires avec lesdits éléments de réseau (C₁, C₂, C₃, P₁ et P₂) afin d'établir une connexion entre le noeud de commutation d'où émane ledit appel de service, et ladite ressource spécialisée.

2. Passerelle selon la revendication précédente, **caractérisée en ce que** ladite représentation (V) comporte une table de correspondance entre d'une part lesdits éléments de réseau (C₁, C₂, C₃, P₁ et P₂), et d'autre part, les protocoles de communication supportés.

3. Passerelle selon l'une des revendications précédentes, **caractérisée en ce que** ladite représentation (V) comporte une table de correspondance entre lesdits noeuds de commutation (C₁, C₂ et C₃) et lesdites ressources spécialisées (P₁ et P₂).

4. Passerelle selon l'une des revendications précédentes, **caractérisée en ce que** lesdites ressources spécialisées (P₁, P₂) sont des périphériques intelligents, **en ce que** lesdits noeuds de commutation (C₁, C₂, C₃) sont des commutateurs d'accès aux services et **en ce que** lesdits serveurs d'applications (SCP) sont des points de contrôle de services, conformément aux recommandations de la série Q.1200 de l'ITU-T.

5. Réseau intelligent comportant au moins une passerelle conforme à la revendication précédente.

6. Procédé pour connecter un noeud de commutation (C₁, C₂, C₃) à une ressource spécialisée (P₁, P₂) parmi un ensemble de ressources spécialisées disponibles, à la demande d'un service (S) ayant été appelé par ledit noeud de commutation, ledit service étant contenu par un serveur d'application (SCP), **caractérisé en ce qu'**il comporte les étapes ordonnées suivantes :
• Émission par ledit service d'une demande d'utilisation de ressource spécialisée, à destination d'une passerelle (G),
• Choix, par ladite passerelle, d'une ressource spécialisée parmi ledit ensemble,
• Établissement, par ladite passerelle, de la connexion entre ledit noeud de commutation et ladite ressource spécialisée.

7. Procédé selon la revendication précédente, **caractérisé en ce que** ledit choix est réalisé en consultant une table de correspondance mettant en regard lesdits noeuds de commutation (C₁, C₂, C₃) et les ressources spécialisées dudit ensemble.

8. Procédé selon l'une des revendications 6 ou 7, **caractérisé en ce que** ledit établissement est réalisé en consultant une table de correspondance mettant en regard lesdits noeuds de commutation (C₁, C₂, C₃) et lesdites ressources spécialisées (P₁ et P₂), avec les protocoles de communication supportés.

9. Procédé selon l'une des revendications 6 à 8, **caractérisé en ce que** lesdites ressources spécialisées (P₁, P₂) sont des périphériques intelligents, **en ce que** lesdits noeuds de commutation (C₁, C₂, C₃) sont des commutateurs d'accès aux services et **en ce que** lesdits serveurs d'applications (SCP) sont des points de contrôle de services, conformément aux recommandations de la série Q.1200 de l'ITU-T.

## Patentansprüche

1. Gateway (G) zwischen zwei Netzen, das die Kommunikation zwischen Diensten (S) ermöglicht, die in Anwendungsservern (SCP) im ersten Netz realisiert sind, und Netzelementen, die das zweite Netz bilden, wobei es sich bei diesen Netzelementen um Vermittlungsknoten (C₁, C₂, C₃) oder spezialisierte Ressourcen (P₁, P₂) handeln kann und die genannten Dienste (S) im Anschluss an eine von einem der genannten Vermittlungsknoten (C₁, C₂, C₃) kommenden Dienstanforderung Anforderungen zur Nutzung einer spezialisierten Ressource an das genannte Gateway senden können, **dadurch gekennzeichnet, dass** das genannte Gateway folgendes aufweist:
• Auswahlmittel, um beim Empfang jeder der genannten Anforderungen unter den genannten spezialisierten Ressourcen (P₁, P₂) mit Hilfe eines Modells (V) des genannten zweiten Netzes eine spezialisierte Ressource zu wählen,
• Verbindungsmittel, um den erforderlichen Datenaustausch mit den genannten Netzelementen (C₁, C₂, C₃, P₁ und P₂) zu ermöglichen, damit eine Verbindung zwischen dem Vermittlungsknoten, von dem die genannte Dienstanforderung kommt, und der genannten spezialisierten Ressource hergestellt werden kann.

2. Gateway gemäß dem vorstehenden Anspruch, **dadurch gekennzeichnet, dass** das genannte Modell (V) eine Zuordnungstabelle zwischen den genannten Netzelementen (C₁, C₂, C₃, P₁ und P₂) einerseits und den unterstützten Kommunikationsprotokollen andererseits umfasst.

3. Gateway gemäß einem der vorstehenden Ansprüche, **dadurch gekennzeichnet, dass** das genannte Modell (V) eine Zuordnungstabelle zwischen den genannten Vermittlungsknoten (C₁, C₂ und C₃) und den genannten spezialisierten Ressourcen (P₁ und P₂) umfasst.

4. Gateway gemäß einem der vorstehenden Ansprüche, **dadurch gekennzeichnet, dass** es sich gemäß den Empfehlungen der Serie Q.1200 der ITU-T bei den genannten spezialisierten Ressourcen (P₁, P₂) um intelligente Endgeräte, bei den genannten Vermittlungsknoten (C₁, C₂, C₃) um Service Switching Points und bei den genannten Anwendungsservern (SCP) um Service Control Points handelt.

5. Intelligentes Netz, das mindestens ein Gateway gemäß dem vorstehenden Anspruch umfasst.

6. Verfahren, um bei der Anforderung eines Dienstes (S), der von einem Vermittlungsknoten aufgerufen worden ist, diesen Vermittlungsknoten (C₁, C₂, C₃) unter einer Einheit von verfügbaren spezialisierten Ressourcen mit einer spezialisierten Ressource (P₁, P₂) zu verbinden, wobei der genannte Dienst von einem Anwendungsserver (SCP) realisiert wird, **dadurch gekennzeichnet, dass** dieses Verfahren die folgenden, geordneten Schritte umfasst:
• Aussenden einer Anforderung zur Benutzung einer spezialisierten Ressource durch den genannten Dienst an das Gateway (G),
• Auswahl einer spezialisierten Ressource durch das genannte Gateway unter der genannten Einheit,
• Herstellung der Verbindung zwischen dem genannten Vermittlungsknoten und der genannten spezialisierten Ressource durch das genannte Gateway.

7. Verfahren gemäß dem vorstehenden Anspruch, **dadurch gekennzeichnet, dass** die genannte Auswahl durch Abfragen einer Zuordnungstabelle erfolgt, die die genannten Vermittlungsknoten (C₁, C₂, C₃) und die spezialisierten Ressourcen der genannten Einheit miteinander in Beziehung setzt.

8. Verfahren gemäß einem der Ansprüche 6 oder 7, **dadurch gekennzeichnet, dass** die Verbindung durch Abfragen einer Zuordnungstabelle erfolgt, die die genannten Vermittlungsknoten (C₁, C₂, C₃) und die genannten spezialisierten Ressourcen (P₁ und P₂) mit den unterstützten Kommunikationsprotokollen miteinander in Beziehung setzt.

9. Verfahren gemäß einem der Ansprüche 6 bis 8, **dadurch gekennzeichnet, dass** es sich gemäß den Empfehlungen der Serie Q.1200 der ITU-T bei den genannten spezialisierten Ressourcen (P₁, P₂) um intelligente Endgeräte, bei den genannten Vermittlungsknoten (C₁, C₂, C₃) um Service Switching Points und bei den genannten Anwendungsservern (SCP) um Service Control Points handelt.

## Claims

1. A gateway (G) between two networks and enabling communication to take place between services (S) contained on applications servers (SCP) situated on the first network and network elements forming the second network, it being possible for said network elements to be switching nodes (C₁, C₂, C₃) or specialized resources (P₁, P₂), it being possible for said services (S) to transmit requests to use the specialized resources to said gateway after a service call has been made by one of said switching nodes (C₁, C₂, C₃), said gateway being **characterized in that** it has:
selection means for acting on receiving each of said requests by choosing a specialized resource from among said specialized resources (P₁, P₂) by means of a representation (V) of said second network; and
connection means for implementing the necessary interchange with said network elements (C₁, C₂, C₃, P₁, and P₂) so as to set up a connection between the switching node from which said service call is made and said specialized resource.

2. A gateway according to the preceding claim, **characterized in that** said representation (V) contains a correspondence table between said network elements (C₁, C₂, C₃, P₁, and P₂) and the communications protocols they support.

3. A gateway according to any preceding claim, **characterized in that** said representation (V) contains a correspondence table between said switching nodes (C₁, C₂, and C₃) and said specialized resources (P₁ and P₂).

4. A gateway according to any preceding claim, **characterized in that** said specialized resources (P₁, P₂) are intelligent peripherals, **in that** said switching nodes (C₁, C₂, C₃) are service switching points, and **in that** said applications servers (SCP) are service control points, in compliance with the recommendations of the Q.1200 series by ITU-T.

5. An intelligent network including a gateway according to the preceding claim.

6. A method of connecting a switching node (C₁, C₂, C₃) to a specialized resource (P₁, P₂) from among a set of available specialized resources, on request from a service (S) that has been called by said switching node, said service being contained by an applications server (SCP), said method being **characterized in that** it includes the following steps in order:
said service transmits a request to use a specialized resource to a gateway (G);
said gateway chooses a specialized resource from said set; and
said gateway sets up the connection between said switching node and said specialized resource.

7. A method according to the preceding claim, said method being **characterized in that** the choice is made by consulting a correspondence table between said switching nodes (C₁, C₂, C₃) and the specialized resources of said set.

8. A method according to claim 6 or 7, **characterized in that** said connection is set up by consulting a correspondence table that matches said switching nodes (C₁, C₂, C₃) and said specialized resources (P₁ and P₂), to the communications protocols that are supported.

9. A method according to any one of claims 6 to 8, **characterized in that** said specialized resources (P₁, P₂) are intelligent peripherals, **in that** said switching nodes (C₁, C₂, C₃) are service switching points, and **in that** said applications servers (SCP) are service control points, in compliance with the recommendations of the Q.1200 series by ITU-T.
